# EUROPÄISCHE PATENTSCHRIFT

(11) **EP 1 031 273 B1**
(45) Veröffentlichungstag und Bekanntmachung des Hinweises auf die Patenterteilung: **07.05.2003**
(21) Anmeldenummer: 00103107.9
(22) Anmeldetag: 16.02.2000
(51) Int. Cl.: A01F 12/40, A01D 41/12

(54) **Mähdrescher mit Breitverteileraustrag für gehäckseltes Stroh-Spreu-Gemisch**
Combine with means for wide spreading chaff and chopped straw
Moissonneuse-batteuse munie de moyens à répartir le mélange de balles et de menues pailles

(30) Priorität: 25.02.1999 DE 19908111
(43) Veröffentlichungstag der Anmeldung: 30.08.2000
(73) Patentinhaber: CLAAS Selbstfahrende Erntemaschinen GmbH, 33428 Harsewinkel (DE)
(72) Erfinder: Niermann, Martin, 33428 Harsewinkel (DE)

(56) Entgegenhaltungen:
- EP-A- 0 631 717
- GB-A- 2 165 732

## Beschreibung

Die Erfindung bezieht sich auf einen Mähdrescher mit einem oder mehreren im abgabeseitigen Bereich angeordneten Wurfgebläsen für den Breitverteileraustrag des Stroh-Spreugemisches, wobei den Wurfgebläsen eine Häcksel- und/oder rotierende Übergabeeinrichtung vorgeordnet ist.

Ein gattungsgemäßer Mähdrescher ist aus der DE-PS 43 21 905 bekannt. Dort ist einem Mähdrescher im abgabeseitigen Bereich ein Anbauhäcksler für das anfallende Stroh zugeordnet. Stromabwärts des Gutstroms schließen sich zwei Wurfgebläse für den Breitverteileraustrag des aus Stroh und Spreu bestehenden Häckselgutes an. Die Wurfgebläse sind dabei unterhalb des Häckslers angeordnet und werden von oben her durch einen Übergabetrichter mit dem Häckselgut beschickt. Die dem Gut nach Durchlaufen des Häckslers innewohnende Bewegungsenergie geht dabei verloren. Das Häckselgut muß nach Aufnahme in den Wurfgebläsen in der Richtung umgelenkt und neu beschleunigt werden.

Die Aufgabe der vorliegenden Erfindung ist es, einen energiesparenden Austrag des Häckselgutes mit einer weiten Streuung auf das Feld zu erreichen.

Die Aufgabe wird gelöst, indem die Gutaustrittsöffnung des Häckslers oder der Übergabeeinrichtung zu Zwecken der Gutübergabe ohne Richtungsänderung in der gleichen Ebene liegt wie die Guteintrittsöffnung der Wurfgebläse. Bei einer solchen Anordnung braucht das Häckselgut für die Übergabe vom Häcksler zur Breitverteileraustragvorrichtung nicht abgebremst zu werden. Es kann mit der Geschwindigkeit weiterbefördert werden, mit der es den Häcksler abgabeseitig verläßt. Auch ist eine weitere Beschleunigung des Häckselgutes über die Abgabegeschwindigkeit aus dem Häcksler hinaus möglich. Dadurch können Verteilbreiten erzielt werden, die bei einer zwischenzeitlichen Abbremsung des Häckselgutes nicht erreichbar waren, was insbesondere bei sehr breiten Schneidwerken von beispielsweise 9 m zu einer ungleichmäßigen Verteilung des Häckselgutes führte und die Nachbearbeitung des Feldes erschwerte. Auch wird durch eine solche Anordnung die Verstopfungsgefahr eines Häckslers und der Wurfgebläse verringert, da sich an der Stelle, an der herkömmlich das Häckselgut umgelenkt wurde, nun kein Material mehr stauen kann. Die gleichmäßigere Abförderung des Häckselgutes auch bei schwankendender Aufgabemenge wiederum beeinflußt die Häckselqualität positiv.

Weitere vorteilhafte Ausgestaltungen und Weiterbildungen der Erfindung finden sich in den Unteransprüchen. So hat die nach unten offene Bauweise der Verteilgebläse den Vorteil, daß dann, wenn zuviel Material aus dem Häcksler an die Wurfgebläse abgegeben wird, solches überschüssige Material an den Wurfgebläsen vorbei auf den Boden fallen kann und keine Verstopfung verursacht. Die gradlinig ansteigenden oder gestuft ausgebildeten Kanten der Teilstücke bewirken auf einfache Art und Weise eine gute Querverteilung des Häckselgutes. Durch Höhenverstellung oder Verdrehung der Teilstücke ist eine einfache Verstellung der Verteilbreite möglich.

Anhand der beiliegenden Zeichnungen sei die Erfindung beispielhaft erläutert. Es zeigen:
- Figur 1: eine Seitenansicht des Erfindungsgegenstandes im Schnitt nach der Linie I-I in Figur 2;
- Figur 2: eine schematische Draufsicht auf einen Anbauhäcksler und Wurfgebläse nach dem neuen Vorschlag;
- Figur 3: einen Teilschnitt nach der Linie II-II in Figur 2,
- Figur 4: eine Alternative zu der Ausführung nach Figur 3,
- Figur 5: eine Ansicht aus der Pfeilrichtung Y in Figur 1,
- Figur 6: eine Ansicht eines Mähdreschers, in dem der Häcksler in die rotierende Trenneinrichtung integriert ist und die Abgabe des Häckselgutes durch einen rotierenden Übergabeförderer erfolgt.

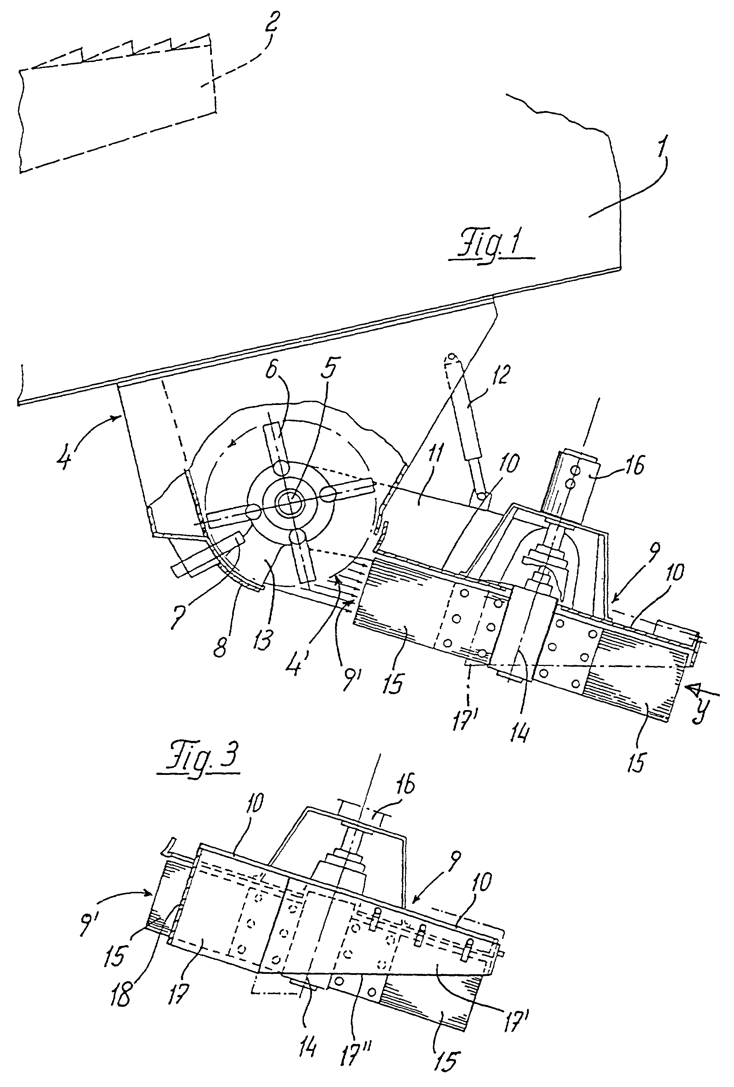

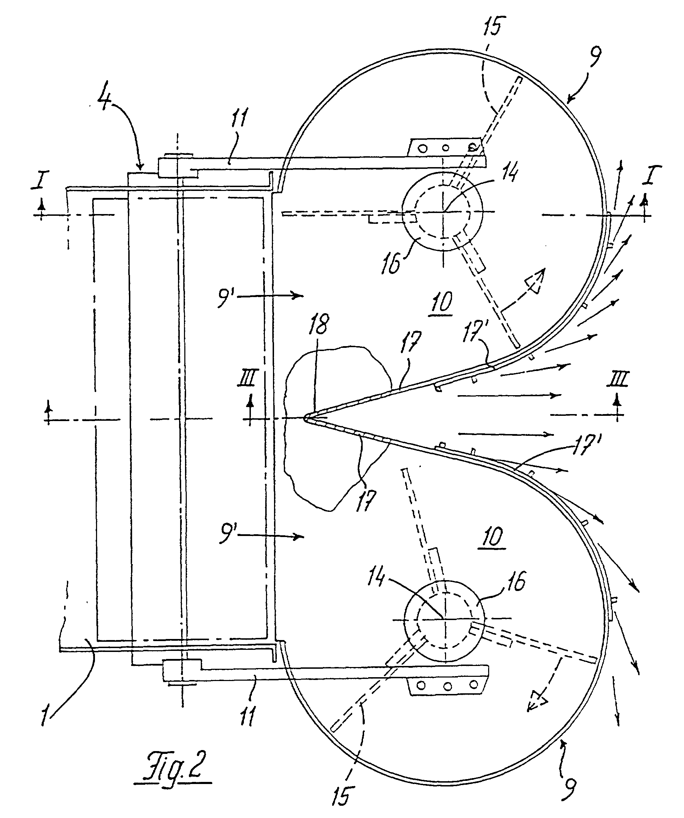

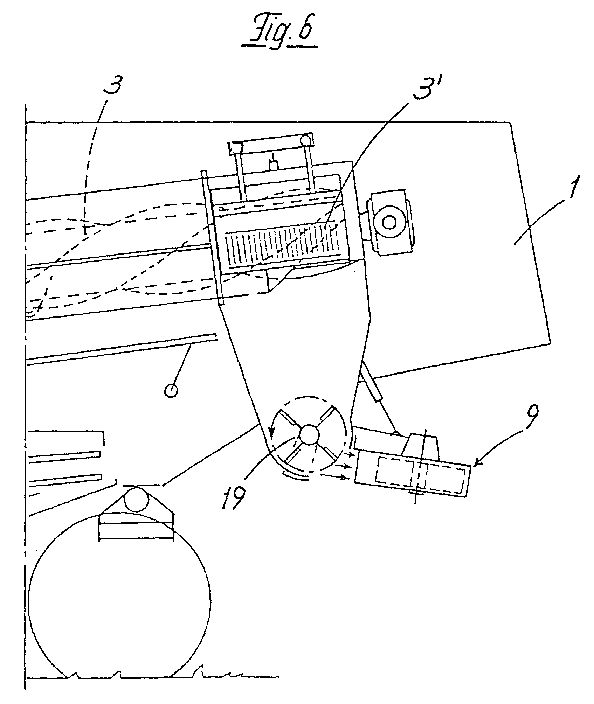

Mit 1 ist die Strohausfallhaube eines Mähdreschers bezeichnet, in der das ausgedroschene Stroh-Streu-Gemisch abgebende Enden von Schüttlern 2 oder wahlweise rotierende Axialabscheideorgane 3 enden. Beim Einsatz letzterer kann eine koaxial angeschlossene Häckseleinrichtung 3' vorgesehen sein. Unterhalb der Ausfallhaube 1 ist ein Anbauhäcksler 4 angeordnet, dessen Rotationsachse mit 5, dessen Schlegelmesser mit 6 und dessen Gegenmesser mit 7 bezeichnet sind. Bei Mähdreschern mit rotierenden Axialabscheideorganen und dort inkorporierter Häckseleinrichtung 3' nach Figur 6 tritt an die Stelle des Anbauhäckslers 4 ein in Figur 6 dargestellter rotierender Übergabeförderer 19, dessen Gehäuseaufbau dem des Häckslers 4 entspricht. Dem Häcksler ist ein lageveränderbares, die Gutsaustrittöffnung 4' nach unten begrenzendes Bodenteil 8 zur Leitung des Häckselgutstroms zugeordnet. Dem Häcksler 4 nachgeordnet sind leicht zum Erdboden geneigt, zwei achsparallel zueinander vorgesehene Häckselwurfgebläse 9, deren Gehäuse nach unten offen sind und die über Deck- und Lagerplatten 10, Tragarme 11 und Stellglieder 12 lageveränderbar aufgehängt sind. Die Tragarme sind mähdrescherseitig auf der Rotationsachse 5 des Häckslers 4 gelagert und über Verbindungselemente 13 mit dem Bodenteil 8 des Häckslers 4 verbunden. Die Stellglieder 12 sind am Gehäuse des Häckslers befestigt. Bei deren Betätigung werden die Wurfgebläse 9 zusammen mit dem Bodenteil 8 um die Häckselrotationsachse 4 zwecks Veränderung der Häckselgutwurfrichtung verschwenkt. Die Gutflußrichtung aus dem Häcksler 4 in die Eintrittsöffnungen 9' der Wurfgebläse 9 bleibt dabei tangential unverändert. Die Rotationsachsen 14 der Gebläse 9 sind mit Wurfpaddeln 15 besetzt, die aus Metall oder einem flexiblen Material bestehen können. Die zugehörigen Antriebselemente tragen das Bezugszeichen 16. An den Wurfgebläsedeckplatten 10 sind - mit Ausnahme des Bereichs des Guteinlaufs - zum Boden gerichtete, zweigeteilte Mantelflächen 17; 17' angeordnet, die zwischen den beiden Gebläsen 9, im Bereich der Guteintrittsöffnung 9' eine Teilerspitze 18 bilden die in der Teilerspitze 18 vereinten Mantelflächen 17 haben in der Teilerspitze 18 eine Bautiefe, die mindestens der der Gutaustrittsöffnung 4' entspricht.

Von der Teilerspitze 18 aus erstrecken sich die Mantelflächen 17 in Drehrichtung der Gebläserotoren bis etwa in Höhe der Gebläse-Drehachsen unverändert. Die sich anschließenden, die Gebläse-Rotoren bereichsweise umgebenden Mantelflächen werden durch Teilummantelungen 17' gebildet, deren zum Boden ausgerichteten Kanten gradlinig oder gestuft bis auf Höhe der Deckplatten 10 ansteigend verlaufen.

Zu den möglichen Fördergeschwindigkeiten ist festzustellen, daß ein Strohhäcksler das Erntegut mit einer Fördergeschwindigkeit von ca. 10 m/s auswirft. Während bei einer herkömmlichen Gutumlenkung das Häckselgut auf bis zu 5 m/s abgebremst wurde mit einer entsprechenden Verringerung der Wurfweite, ist es mit der erfindungsgemäßen Vorrichtung möglich, bei einer beispielsweisen Drehzahl der Wurfgebläse von 400 - 600 U/min. eine Abwurfgeschwindigkeit aus dem Wurfgebläse von 20 m/s zu erzielen.

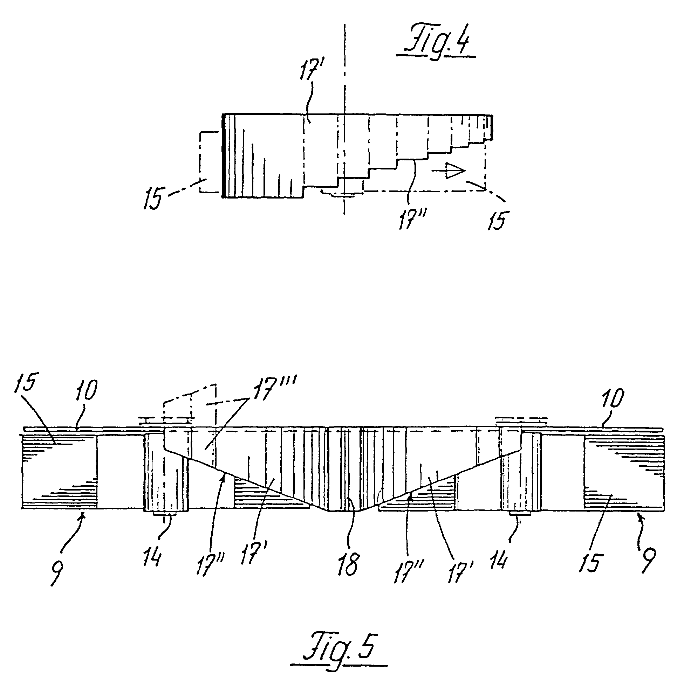

Die abgeschrägten Teilummantelungen 17' sind zur Veränderung des Streuwinkels zusätzlich als Ganzes höhenverstellbar. Auch eine Verdrehung zu diesem Zweck ist möglich. Am äußeren und niedrigsten Abgabeende der abgeschrägten Mantelteile 17' können zu deren Verkürzung auch umklappbare Abschnitte 17"' vorgesehen sein (Figur 5).

Die Erfindung ist nicht auf das beschriebene Ausführungsbeispiel beschränkt und kann von einem Fachmann für seine Zwecke abgewandelt und einzelne Bauteile und Komponenten durch ihm als geeigneter erscheinende Elemente ausgetauscht werden.

### Bezugszeichenliste

- 1 -: Strohausfallhaube MD
- 2 -: Schüttler
- 3 -: Axialabscheideorgan
- 3' -: Häckseleinrichtung am Axialabscheider 3
- 4 -: Anbauhäcksler
- 4' -: Anbauhäcksler - Austrittsöffnung
- 5 -: Rotationsachse
- 6 -: Schlegelmesser
- 7 -: Gegenmesser
- 8 -: Bodenteil
- 9 -: Häckselwurfgebläse
- 9' -: Eintrittsöffnungen
- 10 -: Deck- und Lagerplatte
- 11 -: Tragarme für Deckplatte der Wurfgebläse
- 12 -: Stellglieder für Wurfgebläse
- 13 -: Verbindung Tragarm 11 und Bodenteil 8
- 14 -: Rotationsachse für Gebläse 9
- 15 -: Wurfpaddel für Gebläse 9
- 16 -: Antriebselemente für Gebläse 9
- 17; 17' -: Mantelflächen der Wurfgebläse
- 17" -: Kanten
- 17"' -: umklappbare Abschnitte der Mantelflächen 17'
- 18 -: Teilerspitze
- 19 -: Übergabeförderer

## Patentansprüche

1. Mähdrescher mit einem oder meherern im abgabeseitigen Bereich angeordneten Wurfgebläsen für den Breitverteileraustrag des Stroh-Spreu-Gemisches, wobei den Wurfgebläsen eine Häcksel- und/oder rotierende Übergabeeinrichtung vorgeordnet ist,
**dadurch gekennzeichnet,**
**daß** die Gutaustrittsöffnung (4') des Häckslers (4) oder des Übergabeförderers (19) zu Zwecken der Gutübergabe ohne Richtungsänderung in der gleichen Ebene liegt wie die Guteintrittsöffnung (9') der Wurfgebläse (9).

2. Mähdrescher nach Anspruch 1,
dadurch geken nzeichnet,
daß die Querschnitte der Austrittsöffnung (4') aus dem Häcksler (4) und die Eintrittsöffnung (9') zum Wurfgebläse (9) annähernd gleichgroß sind.

3. Mähdrescher nach Anspruch 1 oder 2,
**dadurch gekennzeichnet,**
**daß** Mittel (8) zur Beibehaltung der gemeinsamen Ebene auch bei Lageänderung der Wurfgebläse (9) vorgesehen sind.

4. Mähdrescher nach Anspruch 3,
**dadurch gekennzeichnet,**
**daß** die Mittel zur Beibehaltung der gemeinsamen Ebene zwischen Austrittsöffnung (4') und Eintrittsöffnung (9') durch ein um die Rotationsachse (5) des Häckslers 84) oder der Übergabeinrichtung schwenkbares Bodenteil (8) dargestellt werden, wobei das Bodenteil (8) über Verbindungselemente (13) an den Tragarmen (11) für die Wurfgebläse (9) befestigt ist.

5. Mähdrescher nach einem oder mehreren der Ansprüche 1 bis 4,
dadurch geken nzeichnet,
daß die je eine Deck- und Lagerplatte (10) aufweisenden Wurfgebläse (9) über Tragarme (11) einerseits an der Rotationsachse (5) des Häckslers (4) oder der Übergabeeinrichtung und andererseits an Stellgliedern (12) winkelschwenkbar aufgehängt und die Stellglieder (12) mit maschinenfesten Bauteilen verbunden sind.

6. Mähdrescher nach einem oder mehreren der Ansprüche 1 bis 5,
**dadurch gekennzeichnet,**
**daß** hinter dem Häcksler (4) oder der Übergabeeinrichtung zwei zum Boden hin offene, mit rotierenden Wurfpaddeln (15) ausgestattete Wurfgebläse (9) angeordnet sind, deren Umfang - von der Seitenbegrenzung der Eintrittsöffnung (9') ausgehend - von zumindest teilweise umlaufenden, an den Deck- und Lagerplatten (10) befestigten Mantelflächen (17; 17') begrenzt wird.

7. Mähdrescher nach einem oder mehreren der Ansprüche 1 bis 6,
dadurch geken nzeichnet,
daß die Mantelflächen (17, 17') derart ausgebildet sind, daß die beiden im Bereich der Eintrittsöffnung (9') beginnenden Flächen (17) zu einer Teilerspitze (18) in der Eintrittsöffnung (9') vereint sind und in der Höhe gleichbleibend verlaufen.

8. Mähdrescher nach einem oder mehreren der Ansprüche 1 bis 7,
**dadurch gekennzeichnet,**
**daß** die zum Boden ausgerichteten Kanten (17") der sich anschließenden Teilstücke (17') gradlinig oder gestuft in Drehrichtung der Gebläserotoren bis auf Höhe der Deckplatten (10) ansteigend verlaufen.

9. Mähdrescher nach einem oder mehreren der Ansprüche 1 bis 8,
**dadurch gekennzeichnet,**
**daß** die sich in der Höhe verringernden Mantelflächenteilstücke (17') höhenverstellbar und/oder drehbar an den Deck- und Lagerplatten (10) der Wurfgebläse (9) befestigt sind.

10. Mähdrescher nach einem oder mehreren der Ansprüche 1 bis 9,
**dadurch gekennzeichnet,**
**daß** die Mantelflächenteilstücke (17') nach oben umklappbare Abschnitte (17'') aufweisen

## Claims

1. A combine harvester having one or more projection blowers arranged in the delivery region for widthwise distribution discharge of the straw-chaff mixture, wherein arranged upstream of the projection blowers is a chaff cutting device and/or rotating transfer device, **characterised in that** the material discharge opening (4') of the chaff cutter (4) or the transfer conveyor (19) for the purposes of material transfer without a change in direction is in the same plane as the material intake opening (9') of the projection blowers (9).

2. A combine harvester according to claim 1 **characterised in that** the cross-sections of the discharge opening (4') from the chaff cutter (4) and the intake opening (9') to the projection blower (9) are approximately of the same size.

3. A combine harvester according to claim 1 or claim 2 **characterised in that** there are provided means (8) for retaining the common plane even upon a change in the position of the projection blowers (9).

4. A combine harvester according to claim 3 **characterised in that** the means for retaining the common plane between the discharge opening (4') and the intake opening (9') are represented by a bottom portion (8) pivotable about the axis of rotation (5) of the chaff cutter (4) or the transfer device, wherein the bottom portion (8) is fixed by way of connecting elements (13) to the carrier arms (11) for the projection blowers (9).

5. A combine harvester according to one or more of claims 1 to 4 **characterised in that** the projection blowers (9) which each have a cover and mounting plate (10) are suspended angularly pivotably by way of carrier arms (11) on the one hand at the axis of rotation (5) of the chaff cutter (4) or the transfer device and on the other hand at control members (12) and the control members (12) are connected to components which are fixed with respect to the machine.

6. A combine harvester according to one or more of claims 1 to 5 **characterised in that** arranged downstream of the chaff cutter (4) or the transfer device are two projection blowers (9) which are open towards the ground and which are equipped with rotating projection paddles (15) and the periphery of which - starting from the side boundary of the intake opening (9') - is delimited by at least partially peripherally extending casing surfaces (17; 17') which are fixed to the cover and mounting plates (10).

7. A combine harvester according to one or more of claims 1 to 6 **characterised in that** the casing surfaces (17, 17') are such that the two surfaces (17) which begin in the region of the intake opening (9') are combined to form a divider tip (18) in the intake opening (9') and extend uniformly in respect of height.

8. A combine harvester according to one or more of claims 1 to 7 **characterised in that** the edges (17"), which are directed towards the ground, of the mutually adjoining portions (17') extend linearly or stepped in a rising configuration in the direction of rotation of the blower rotors to the height of the cover plates (10).

9. A combine harvester according to one or more of claims 1 to 8 **characterised in that** the casing surface portions (17') which decrease in respect of height are fixed adjustably in respect of height and/or rotatably to the cover and mounting plates (10) of the projection blowers (9).

10. A combine harvester according to one or more of claims 1 to 9 **characterised in that** the casing surface portions (17') have parts (17") which can be folded pivotably upwardly.

## Revendications

1. Moissonneuse-batteuse comprenant une ou plusieurs soufflantes de projection disposées dans la zone côté sortie pour l'éparpillement en largeur du mélange de balle et de menue paille, les soufflantes de projection étant précédées d'un dispositif hacheur ou broyeur et/ou d'un dispositif de transfert rotatif,
**caractérisée par le fait**
**que** l'ouverture de sortie de produit (4') du hacheur (4) ou du dispositif de transfert (19) est située dans le même plan que l'ouverture d'entrée de produit (9') des soufflantes de projection (9) en vue d'un transfert de produit sans changement de direction.

2. Moissonneuse-batteuse suivant la revendication 1,
**caractérisée par le fait**
**que** l'ouverture de sortie de produit (4') du hacheur (4) et l'ouverture d'entrée de produit (9') des soufflantes de projection (9) présentent sensiblement la même section.

3. Moissonneuse-batteuse suivant la revendication 1 ou 2,
**caractérisée par le fait**
**que** des moyens (8) sont prévus pour conserver le plan commun également en cas de changement de position des soufflantes de projection (9).

4. Moissonneuse-batteuse suivant la revendication 3,
**caractérisée par le fait**
**que** les moyens pour conserver le plan commun entre l'ouverture de sortie (4') et l'ouverture d'entrée (9') sont constitués par une partie de fond (8) pivotant autour de l'axe de rotation (5) du hacheur (4) ou du dispositif de transfert, la partie de fond (8) étant fixée par des éléments de liaison (13) aux bras porteurs (11) pour les soufflantes de projection (9).

5. Moissonneuse-batteuse suivant une ou plusieurs des revendications 1 à 4,
**caractérisée par le fait**
**que** les soufflantes de projection (9) présentant chacune une plaque de couverture et de montage (10) sont suspendues à pivotement par des bras porteurs (11) d'une part à l'axe de rotation (5) du hacheur (4) ou du dispositif de transfert et d'autre part à des organes de réglage (12) et que les organes de réglage (12) sont reliés à des parties fixes de la machine.

6. Moissonneuse-batteuse suivant une ou plusieurs des revendications 1 à 5,
**caractérisée par le fait**
**que** derrière le hacheur (4) ou le dispositif de transfert sont disposées deux soufflantes de projection (9) ouvertes vers le sol, équipées de pales de projection tournantes (15) et délimitées circonférentiellement, depuis la délimitation latérale de l'ouverture d'entrée (9'), par des parois d'enveloppe (17 ; 17') fixées aux plaques de recouvrement et de montage (10) et s'étendant sur une partie au moins de la circonférence.

7. Moissonneuse-batteuse suivant une ou plusieurs des revendications 1 à 6,
**caractérisée par le fait**
**que** les parois d'enveloppe (17 ; 17') sont conformées de manière que les deux surfaces (17) commençant dans la zone de l'ouverture d'entrée (9') se rejoignent en une pointe de division (18) dans l'ouverture d'entrée (9') et s'étendent à hauteur constante.

8. Moissonneuse-batteuse suivant une ou plusieurs des revendications 1 à 7,
**caractérisée par le fait**
**que** les parties de parois d'enveloppe (17') présentent des arêtes (17'') tournées vers le sol qui montent dans le sens de rotation des rotors des soufflantes de façon rectiligne ou échelonnée jusqu'à la hauteur des plaques de recouvrement (10).

9. Moissonneuse-batteuse suivant une ou plusieurs des revendications 1 à 8,
**caractérisée par le fait**
**que** les parties de parois d'enveloppe (17') qui diminuent de hauteur sont fixées de façon réglable en hauteur et/ou par rotation aux plaques de recouvrement et de montage (10).

10. Moissonneuse-batteuse suivant une ou plusieurs des revendications 1 à 9,
**caractérisée par le fait**
**que** les parties de parois d'enveloppe (17') présentent des portions (17'') rabattables vers le haut.
